# EUROPÄISCHE PATENTANMELDUNG

(11) **EP 1 762 810 A2**
(43) Veröffentlichungstag der Anmeldung: **14.03.2007**
(21) Anmeldenummer: 06018881.0
(22) Anmeldetag: 08.09.2006
(51) Int. Cl.: F28F 19/06, F28F 3/02, F02B 29/04

(54) **Korrosionsbeständiger Ladeluftkühler und Verfahren zur Herstellung desselben**

(30) Priorität: 08.09.2005 US 222262
(71) Anmelder: Behr America, Inc, Troy, Michigan 48083 (US)
(72) Erfinder: Grajzl, Harold A. (Jerry), Summerville, South Carolina 29485 (US)
(74) Vertreter: Nestler, Jan Hendrik

(57) **Zusammenfassung**

Es wird ein korrosionsbeständiger Wärmetauscher zur Verwendung beim Kühlen einer Mischung von Abgas und Ladeluft zur Verfügung gestellt, der aufweist eine Ladeluft-Einlasskammer (14), eine Ladeluft-Auslasskammer und eine Mehrzahl von Flachrohren (16) durch welche die Mischung passiert und von Umgebungsluft gekühlt wird. Die Flachrohre (16) weisen Turbulatoren (22) auf, um die Kühlung der Abgas/Luft-Mischung zu unterstützen, und die Turbulatoren (22) werden durch eine erste Aluminiumlegierung gebildet, die mit einer zweiten Aluminiumlegierung plattiert ist, wobei die Kombination der Legierungen eine "braune Band"-Opferschicht nach dem Löten bildet. Bei einem besonders bevorzugten Ausführungsbeispiel werden sowohl die Rohre als auch die Turbulatoren (22) aus dem gleichen Material gebildet.

## Beschreibung

### Gebiet der Erfindung

Die vorliegende Erfindung betrifft einen Wärmetauscher im Allgemeinen, und einen Turbulator für einen Ladeluftkühler im Besonderen, der gegenüber Korrosion beständig ist, und ein Verfahren zur effizienten Herstellung eines solchen Wärmetauschers. Ein gemäß der vorliegenden Erfindung hergestellter Wärmetauscher mit einem Turbulator kann besonders vorteilhaft für die Verwendung in Fahrzeugen sein, bei denen Abgas mit niedrigem Druck dem Ladeluftkühler zugeführt wird.

### Hintergrund der Erfindung

Auto- und andere Kraftfahrzeughersteller sehen sich mit einer beständig wachsenden Nachfrage konfrontiert, saubere und sparsamere Fahrzeuge herzustellen. Diese Hersteller müssen Verbrennungsmotoren herstellen, die Leistungsanforderungen entsprechen und gleichzeitig den wachsenden E-missionserfordernissen verschiedener staatlicher Standards und Industriestandards genügen.

Motortechnologien, die diese Anforderung angehen, beinhalten elektronische Motorsteuerungen und damit in Zusammenhang stehende Sensoren, Turbolader und Abgas-/Motorgasrückführungs- ("EGR")-Verfahren. Wo Ladelufttechnologien verwendet werden, z.B. die Verwendung eines Turboladers, wurde schon lange erkannt, dass ein richtig ausgeführter Wärmetauscher - auch als ein Nach- oder Zwischenkühler bekannt - die Motoreffizienz erhöhen kann, während er gleichzeitig unerwünschte Emissionen verringert.

Das Verfahren der Aufladung von Luft in einem Turbolader resultiert in einem Anstieg der Temperatur der Ladeluft. Nachkühler sind Wärmetauscher, üblicherweise Luft-Luft-Wärmetauscher, die Umgebungs- oder Außenluft für die Kühlung der Motoransaugluft verwenden, nachdem sie eine Ladevorrichtung passiert hat und bevor sie in eine Verbrennungskammer des Motors eintritt. Kältere Treibstoff/Luft-Gemische brennen effizienter mit wesentlich verringerten Emissionen als ungekühlte Ladeluft. Ein geeignetes Aufladen der Luft, wenn in Verbindung mit Luft-Luft-Kühlvorrichtungen, kann eine Motorleistungsdichte wesentlich erhöhen mit geringer oder ohne einer Vergrößerung seiner physikalischen Abmessungen oder Verringerung seiner erwarteten Standzeit vor einer Wartung.

Abgasrückführung ("EGR") ist eine ergänzende Technologie zur Verringerung schädlicher Emissionen, insbesondere bei Dieselmotoren. Dieselmotoren verdichten große Volumen von Luft, die - wenn gemischt mit Treibstoff und entzündet - verbrennt, um Energie zu erzeugen. Wenn ein Kohlenwasserstoffbrennstoff brennt, wird der Brennstoff in Kohlendioxid und Wasserdampf umgewandelt. Zusätzliche Nebenprodukte der Verbrennung umfassen Säuren, Partikelverunreinigungen, wie auch Oxide von Stickstoff (NOx). Bei einem EGR-System werden einige der Verbrennungsgase für eine zusätzliche Verbrennung zum Saugrohr zurückgeführt, um die Menge an Treibstoff zu erhöhen, die verbrannt wurde, bevor sie in die Atmosphäre gelangen. EGR-Systeme führen üblicherweise auch zu einer niedrigeren Verbrennungstemperatur und verringerten NOx-Abgasnebenprodukten als Systeme ohne Abgasrückführung.

Bei vielen EGR-Systemen wird Abgas direkt in das Saugrohr eines Motors zurückgeführt. Es ist jedoch möglich, das Abgas auch durch einen Ladeluft-Nachkühler oder -Zwischenkühler (der Einfachheit halber bezieht dieses Patent sich auf alle derartigen Wärmetauscher als "Nachkühler") zu führen, um das Abgas weiter abzukühlen, bevor es in das Motorsaugrohr gelangt. Die meisten Nachkühler sind jedoch so ausgebildet, dass sie nur Luft (kein Abgas) durch die Kühlrohre des Wärmetauschers lassen. Obwohl Luft üblicherweise keine Bestandteile umfasst, welche die Bauteile eines Nachkühlers angreifen, hat dies rückgeführtes Motorgas. Abgas umfasst - neben anderen Dingen - schädliche Säurekondensate. Diese korrosiven Säurekondensate, wie Schwefelsäure, Essigsäure und Ameisensäure, erhöhen die Wahrscheinlichkeit von Korrosion im Nachkühler.

Es besteht daher ein Bedarf an einem Nachkühler, der die korrosiven Effekte der Abgaskondensate widerstehen kann. Problematische Elemente im Nachkühler und insbesondere "Turbulator"-Elemente der Kühlrohre des Wärmetauschers müssen korrosionsbeständig gemacht werden. Obwohl korrosionsbeständige Legierungen für Wärmetauscher bekannt sind, wie diejenigen, die im U.S. Patent 6,921,584 beschrieben sind, welches durch Bezugnahme mit einbezogen wird, wurden keine derartigen Legierungen für Turbulatorelemente verwendet.

### Zusammenfassung der Erfindung

Die Erfindung betrifft im Allgemeinen einen Wärmetauscher für ein Kraftfahrzeug, wie einen Nachkühler, der Turbulatorelemente in den Wärmetauscher-Kühlrohren enthält. Die Turbulatorelemente weisen einen Kern und einer Plattierung, die, wenn in einem Lötofen verlötet, ein "braunes Band" oder eine Opferdiffusionsschicht bildet, die Korrosion auf ausgezeichnete Weise widersteht, verglichen mit zuvor bekannten Turbulatorelementen. Die Plattierung ist üblicherweise eine Al-Si-Legierung, die einen geringeren Schmelzpunkt als der Kern hat. Wie auf diesem Gebiet bekannt ist, diffundiert während des Lötvorgangs Silikon von der Plattierung in den Kern, wodurch eine Opferschicht gebildet wird, die nützlich für das Widerstehen von Korrosion der Kernelemente ist. Diese Opferschicht ist auch auf diesem Gebiet als eine "braune Band-"Schicht bekannt.

Die Plattierung, besonders bevorzugt die doppelseitige Plattierung, weist vorzugsweise eine Aluminiumlegierung der 4000-er Reihe oder einer hiervon abgewandelten Zusammensetzung auf. Insbesondere bevorzugt sind Aluminiumlegierungen der Reihen 4004, 4045, 4047, 4104, 4545 oder Abwandlungen hiervon.

Gemäß einem besonders bevorzugten Ausführungsbeispiel sind die Turbulatorelemente aus einem modifizierten AA3003 Aluminiumkern oder einer ähnlichen Legierung (die "AA" Kennzeichnung betrifft die Aluminium Association Inc., welche die Zusammensetzung von Standardaluminiumlegierungen festlegt), die ihrerseits mit einer relativ dünnen Schicht (z.B. 5% der Kerngröße) mit AA4045 Aluminium auf beiden Seiten beschichtet ist. Die Turbulatorelemente werden dann zu einem Rohrbauteil in einem Lötofen gelötet. Gemäß einem besonders bevorzugten Ausführungsbeispiel werden die Turbulatorelemente mittels Gewichtsreduktion aus den Rohrbauteilen gebildet. Alternativ können die Turbulatorelemente die gleiche oder im Wesentlichen die gleiche chemische Zusammensetzung aufweisen, wie sie für das Rohr verwendet wurde, so dass ein geeignetes braunes Band ausgebildet werden kann.

Die Turbulatorelemente weisen bevorzugt eine im Wesentlichen U-förmige Gestalt auf. Alternativ sind Sinusformen, aufgeschnitten und versetzte Formen oder trapezförmige oder rechteckige Formen möglich.

Die Dicke der Turbulatorelemente liegt vorzugsweise im Bereich von 0,1 bis 1,0 mm.

Die Plattierung ist besonders bevorzugt doppelseitig aufgebracht.

Weitere Gegenstände, Merkmale und Vorteile der Erfindung werden aus der detaillierten Beschreibung der bevorzugten Ausführungsbeispiele, die folgen, ersichtlich, wenn sie in Verbindung mit den angehängten Figuren der Zeichnung betrachtet werden.

### Kurze Beschreibung der Zeichnungen

Beispielhafte Ausführungsbeispiele der Erfindung werden im Folgenden unter Bezugnahme auf die Zeichnung angeführt, bei denen:
Fig. 1 eine Zeichnung ist, die schematisch den Luftstrom in einem Motor darstellt, der dazu bestimmt ist, EGR-Abgas durch einen Nachkühler zu führen;
Fig. 2 eine perspektivische Ansicht eines beispielhaften Nachkühler-Wärmetauschers ist, der Turbulatorelemente umfasst;
Fig. 3 eine vergrößerte, perspektivische Ansicht eines Kühlrohres in einem Nachkühler-Wärmetauscher ist, welche die Turbulatorelemente weiter veranschaulicht;
Fig. 4 eine perspektivische Zeichnung, welche den Kern und die Plattierung auf einer Aluminiumlegierung veranschaulicht, die nützlich bei der Bildung von Turbulatorelementen gemäß der vorliegenden Erfindung ist;
Fig. 5 eine Schnittdarstelllung der Aluminiumlegierung von Fig. 4;
Fig. 6 eine Schnittdarstellung eines Kühlrohrs in einem Wärmetauscher, der gemäß der vorliegenden Erfindung hergestellt ist;
Fig. 7A eine vergrößerte Darstellung des Bereichs, in dem ein Turbulatorelement gemäß der vorliegenden Erfindung neben der Seitenwand eines Kühlrohrs vor dem Löten angeordnet ist, und
Fig. 7B eine vergrößerte Darstellung des Bereichs, in dem ein Turbulatorelement gemäß der vorliegenden Erfindung an die Seitenwand eines Kühlrohrs angelötet wird; und
Fig. 8 zur Verfügung gestellt wird aus Vergleichszwecken und eine vergrößerte Darstellung des Bereichs, in dem ein Turbulatorelement gemäß dem Stand der Technik an die Seitenwand eines Kühlrohrs angelötet wird.

### Detaillierte Beschreibung bevorzugter Ausführungsbeispiele

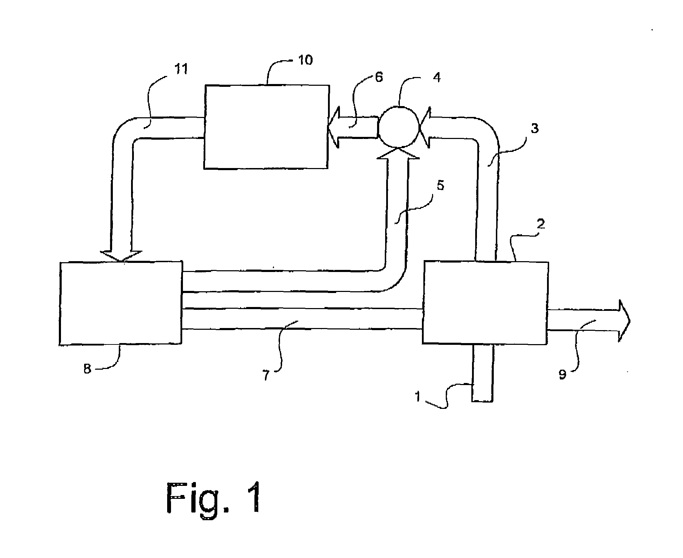

Ein mögliches Beispiel für die Anwendung der vorliegenden Erfindung beinhaltet ein EGR-Turbolader-Dieselmotorsystem. Fig. 1 veranschaulicht schematisch die "Leitungen" eines solchen Systems. Der Dieselmotor selbst wird schematisch durch das Bezugszeichen 8 wiedergegeben. Bei diesem System tritt Umgebungsluft 1 in einen Turbolader 2 ein, der mittels Abgas 7, das den Dieselmotor 8 verlässt, angetrieben wird. Abgas 7, nach dem Antreiben der Turbine des Turboladers 2 wird nachfolgend an die Atmosphäre 9 abgegeben. Ladeluft 3, die den Turbolader 2 verlässt, wird danach mit einem anderen Strom von (Niederdruck-)Abgas 5 vermischt. Obwohl dieses Mischen auf verschiedene Arten erfolgen kann, ist es in Fig. 1 als in einem Mischelement 4 erfolgend verdeutlicht, das ein geeignetes Ventil oder Sammelrohr sein kann.

Bei dieser exemplarischen Umgebung tritt, nachdem die Ladeluft 3 mit Abgas 5 gemischt wird, die Mischung 6 in einen Luft-Luft-Nachkühler 10 ein. Die Luftmischung 6 passiert durch Kühlrohre (im Folgenden beschrieben) im Nachkühler 10, die in Fluidkontakt mit einem erzwungenen Umgebungsluftstrom (nicht dargestellt) sind. Das Zusammenwirken von Umgebungsluft mit Kühlrohren bewirkt, dass die Ladeluft-Abgasmischung 6 abkühlt. Die nun relativ kühlere Ladeluft-Abgasmischung 11 dem Saugrohr des Dieselmotors 8 zugeführt wird, wo sie nachfolgend verbrannt wird.

Das Abgas 5, das sich mit der Ladeluft 3 vermischt, hat einen relativ geringen Druck verglichen mit dem Abgas 7, das verwendet wird, um die Turbine des Turboladers 2 anzutreiben. Das Verfahren des Sammelns von Abgas 5, um es zurück in das Saugrohr eines Dieselmotors zu leiten, ist einem Fachmann bekannt und wird beispielsweise im U.S. Patent 5,802,846 beschrieben, das die Caterpillar Inc. von Peoria, Illinois besitzt, und das hiermit mittels Bezugnahme in seiner Gesamtheit einbezogen wird.

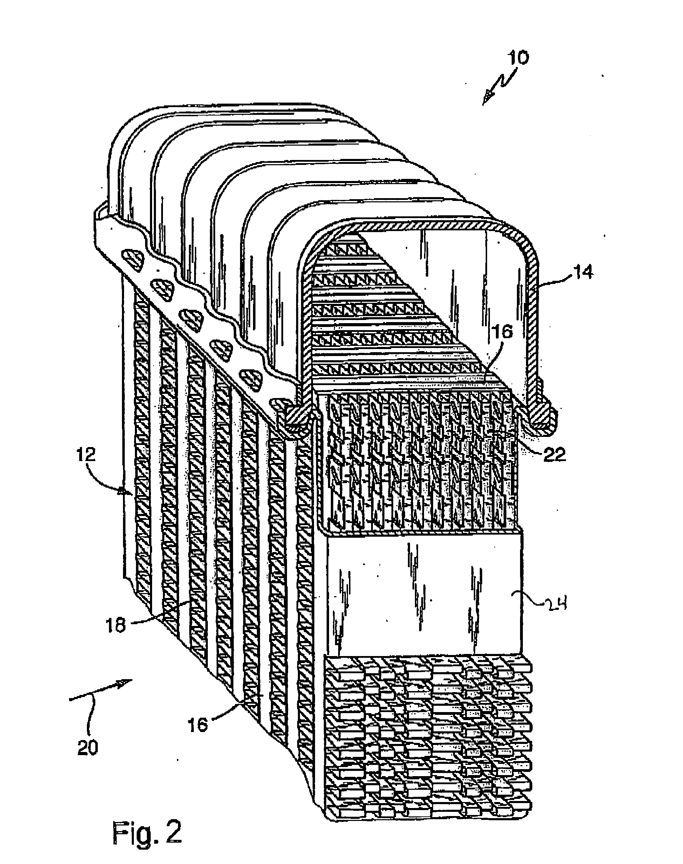

Fig. 2 ist eine perspektivische, ausschnittsweise Ansicht eines Wärmetauschers, und insbesondere eines Wärmetauschers, der verwendet werden kann als ein Luft-Luft-Nachkühler, so wie der Nachkühler 10 der Fig. 1. Diese Art von Wärmetauscher ist im Detail im U.S. Patent 6,729,388 B2, das Behr GmbH & Co. aus Stuttgart, Deutschland besitzt, und das hiermit mittels Bezugnahme in seiner Gesamtheit einbezogen wird.

Der Ladeluftkühler 10 weist einen Lamellen-Rohrblock 12 auf, der mit einer Ladeluft-Einlasskammer 14 und einer Ladeluft-Auslasskammer (nicht dargestellt) verbunden ist. Der Lamellen-Rohrblock 12 weist Flachrohre 16 zwischen denen Lamellen in Form von mit einem Netz versehenen Lamellen oder gewellten Lamellen angeordnet sind. Die Lamellen 18 sind mit den Flachrohren 16 verlötet. Die Ladeluft-Abgas-Treibstoff-Mischung 6 (Fig. 1) strömt von der Ladeluft-Einlasskammer 14 durch die Flachrohre 16 in die Ladeluft-Auslasskammer. Senkrecht zu dieser Ladeluftströmung werden die Lamellen 18 der Einwirkung von Umgebungsluft 20 unterworfen. Da die Ladeluft eine wesentlich höhere Temperatur als die Umgebungsluft 20 hat, erfolgt ein Wärmeübergang von der Ladeluft zur Umgebungsluft 20.

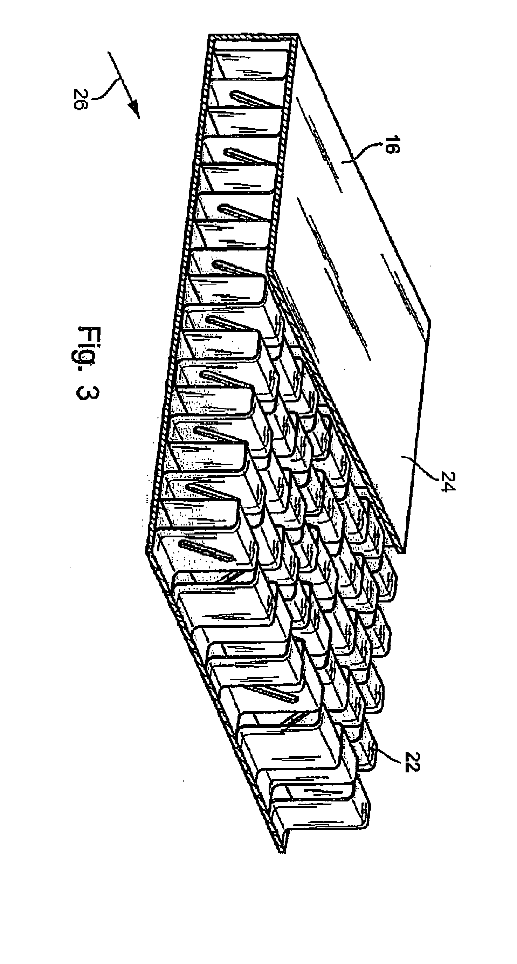

Das Bezugszeichen 22 bezeichnet innere Lamellenelemente, die auch als "Turbulatoren" bekannt sind, welche in den Flachrohren 16 angeordnet und mit denselben verlötet sind. Die Turbulatoren unterstützen ein verbessertes Mischen von Ladeluft in den Flachrohren 16. Fig. 3 ist eine aufgeschnittene Ansicht eines Flachrohrs 16, dessen Endwand 24 auch in Fig. 2 dargestellt ist. In Fig. 3 ist die Ausrichtung und Anordnung der Turbulatorelemente 22 besser ersichtlich. Die Ladeluft-Abgas-Mischung 6 strömt im Allgemeinen durch das Flachrohr 16 in dir Richtung, die durch den Pfeil 26 angezeigt ist. Mittels der Turbulatoren 22 wird ein verbessertes Mischen der heißen Kernströmung mit der Randschichtströmung erreicht. Somit werden die Wärme der Kernströmung nicht länger durch das innere Lamellenelement und die Randschichtströmung durch die Wand geführt. Das heißt, die Randschichtströmung wird absichtlich aufgebrochen und vermischt. Dies resultiert in einem Anstieg der Wärmeübergangsleistung des Ladeluftkühlers 10.

Obwohl die Figuren 2 und 3 einen besonders vorteilhaften Typ eines Turbulators darstellen, wird ein Fachmann verstehen, dass unterschiedliche Strukturen und Anordnungen von Strukturen als Turbulatorelemente verwendet werden können und noch im Umfang der Erfindung liegen.

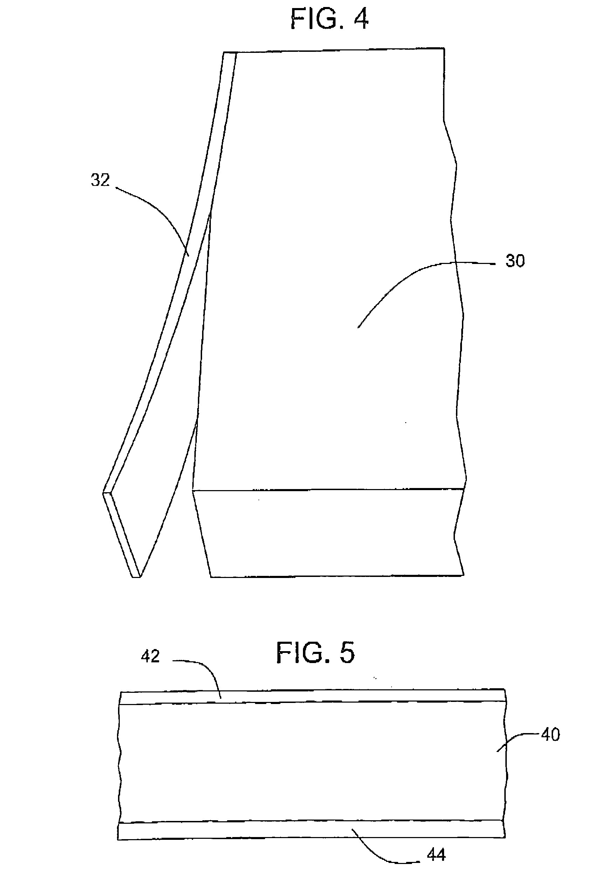

Fig. 4 stellt eine Aluminiumplattierung 32 dar, die an einem Aluminiumkern 30 angebracht ist. Wie in dem oben genannten U.S. Patent 6,921,584 beschrieben, das mittels Bezugnahme mit einbezogen ist, ist die Plattierung üblicherweise eine Al-Si-Legierung, die einen niedrigeren Schmelzpunkt im Vergleich zum Kern hat. Wie es auf dem technischen Bereich bekannt ist, wird während des Lötvorgangs die Plattierung eine Opferschicht, die nützlich zum Widerstehen einer Korrosion der Kernelemente ist. Diese Opferschicht ist auch als eine "braune Band-"Schicht bekannt.

Eine geschnittene Ansicht eines Lötblechs, dass geeignet für die Verwendung für korrosionsbeständigen Luft-Luft-Wärmetauscherbautelle ist, ist in Fig. 5 dargestellt. Diese Figur zeigt Plattierungen 42 und 44, die auf einen Kern 40 gerollt wurden. Bei einem besonders bevorzugten Ausführungsbeispiel der Erfindung besteht die Plattierung aus einer AA 4045 Legierung und der Kern besteht aus einer AA 3003 Legierung o.ä. Eine andere geeignete Plattierungslegierung für Lötverfahren unter Schutzgas (CAB) umschließt AA 4343 oder 4047. Zusätzlich können bei Vakuumlötverfahren (VB) AA 4004, 4104 oder 4047 Plattierungen verwendet werden. Gemäß einem besonders bevorzugten Ausführungsbeispiel beträgt die Dicke der Plattierungen 42 und 44 nicht mehr als 15% der Kerndicke. Auf Grund der Diffusion des Siliziums während des Lötvorgangs haben die Anmelder empirisch bestimmt, dass eine Plattierung von etwa 5% der Dicke des Kerns 40 in einer optimalen Opferschicht resultieren wird. Eine geeignete Zusammensetzung zum Erzeugen eines derartigen "braunen Bandes" Opferschicht, wie in der gerollten Anordnung von Fig. 5, kann verwendet werden, um Endwände 24 von Flachrohren 16 des Wärmetauschers (Fig. 2) zu bilden, wie auch als Turbulatorelemente 22 der Rohre 16.

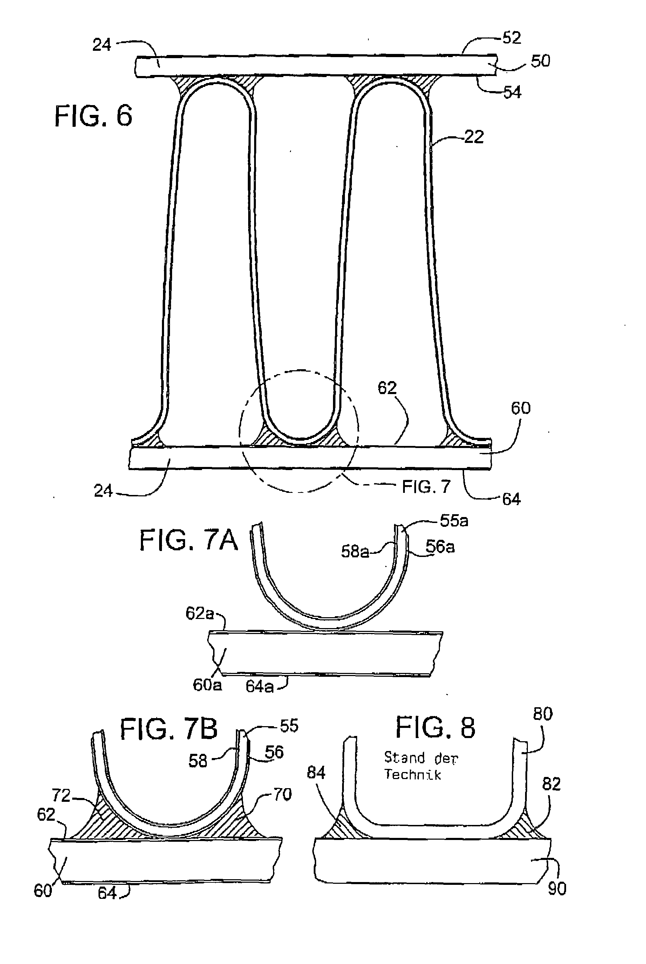

Fig. 6 stellt Turbulatoren 22 mit braunem Band in einem Rohr 16 dar, insbesondere zwischen Endwänden 24. Bei dem bevorzugten Ausführungsbeispiel der Erfindung weist jede Endwand 24 eines Flachrohres einen Kern 50, 60 und auf beiden Seiten Plattierungen 52, 54 bzw. 62, 64 auf, wodurch die braune Band Opferschicht nach dem Löten gebildet wird. Bei diesem Ausführungsbeispiel sind sowohl die Rohre als auch die Turbulatorelemene aus dem selben braunen Bandmaterial ausgebildet, wodurch ein maximaler antikorrosiver Effekt unterstützt wird.

Fig. 7A ist eine vergrößerte Ansicht des Turbulatorelements 22 und der Endwand 24 vor einem Lötvorgang. Plattierungen 56a und 58a umgeben einen Kern 55a eines Turbulatorelements 22. Vergleichbare Plattierungen 62a und 64a umgeben einen Kern 60a einer Endwand 24. Zu diesem Zeitpunkt des Herstellungsverfahrens des Wärmetauschers wurde die "braune Band"-Opferschicht noch nicht erzeugt.

Fig. 7B ihrerseits stellt eine vergrößerte Ansicht des gleichen Bereichs, der in Fig. 7A dargestellt ist, dar, aber nachdem das Turbulatorelement 22 der vorliegenden Erfindung an die Endwand 24 eines Flachrohrs 16 angelötet wurde. Wie aus dieser Figur offensichtlich ist, umfasst der Turbulator 22 selbst einen Kern 55 und Opferschichten 56, 58. Vergleichbar weist die Endwand 24 des Flachrohrs 16 einen Kern 60 und Opferschichten 62,64 auf. Der Lötvorgang wandelt die Oberfläche des Turbulatorkems mittels Siliziumdiffusion von der Plattierungsschicht in den Kern, d.h. 56a, 58a in Opferschichten 56 und 58, um. Das Gleiche trifft für die Plattierung an den Endwänden zu. Bei diesem besonders bevorzugten Ausführungsbeispiel ist die Legierung, die verwendet wird, um die Turbulatorelemente zu bilden, identisch der Legierung, die verwendet wird, um die Rohrwand zu bilden, obwohl ein Fachmann erkennen wird, dass dies nicht immer erforderlich ist. In diesem Hinblick kann das Material, das verwendet wird, um die Turbulatorelemente zu bilden, "heruntergemessen" von dem Material sein, das verwendet wird, um die Rohrelemente zu bilden. Das chemische Zusammenspiel der verschiedenen Schichten während eines Vorgangs eines Schutzgaslötens (CAB) und/oder eines Vakuumlötens (VB) resultierte in einer "braunen Band"-Opferschicht, die an der gesamten Turbulator- und Rohranordnung ausgebildet wurde. Wie in Fig. 7B dargestellt, stellen Kehlnähte 70, 72 die Verbindung zwischen dem Turbulator 22 und dem Rohr 16 dar, wobei die Kehlnähte 70, 72 ihrerseits eine "braune Band"-Opferschicht aufweisen.

Im Gegensatz zu der Struktur, die in Fig. 7 dargestellt ist, stellt Fig. 8 eine Turbulator/Rohr-Verbindung gemäß dem Stand der Technik dar. Bei dieser Ausführungsform gemäß dem Stand der Technik weist weder der Turbulator noch das Rohr eine "braune Band"-Opferschicht auf. Auf Grund des Fehlens einer derartigen Schicht, wird dieses Turbulatorelement in Verbindung mit rückgeführtem Motorgas nicht die selben antikorrosiven Wirkungen haben als das geschütztere Ausführungsbeispiel von Fig. 7. Zusätzlich wurde mittels experimenteller Methoden herausgefunden, dass die Kehlnähte 70, 72, die bei dem Ausführungsbeispiel von Fig. 7 erzeugt wurden, größer als die Kehlnähte 82, 84 der Ausführungsform von Fig. 8 sind. Es sei jedoch angemerkt, dass die Opferschicht bei dem bevorzugten Ausführungsbeispiel unabhängig von der Gestalt der Turbulatorelemente ausgebildet ist.

Während diese Erfindung mit einer Betonung auf spezielle Ausführungsbeispiele beschrieben worden ist, sollte es verstanden werden, dass die vorstehende Beschreibung auf die gegenwärtig betrachteten, besten Arten zum Anwenden der Erfindung geschränkt wurde. Zum Beispiel die genaue Form der Turbulatoren und/oder der Flachrohre kann in Übereinstimmung der Erfindung abgeändert werden. Es wird offensichtlich sein, dass weitere Abwandlungen der Erfindung möglich sind, und dass einige oder alle Vorteile der Erfindung erreicht werden können. Es ist auch nicht erforderlich, dass die Erfindung alle der zuvor beschriebenen Merkmale und Aspekte oder Kombinationen derselben benötigt. In vielen Fällen sind bestimmte Merkmale und Aspekte nicht wesentlich für die Durchführung anderer Merkmale und Aspekte. Die Erfindung sollte nur durch die angehängten Ansprüche und Äquivalente derselben beschränkt sein, da die Ansprüche dafür gedacht sind, die anderen Abwandlungen und Modifikationen abzudecken, selbst wenn sie nicht in deren wörtlichen Umfang liegen.

## Patentansprüche

1. Luft-Luft-Wärmetauscher zur Verwendung in einem Kraftfahrzeug, aufweisend eine Ladeluft-Einlasskammer (14), eine Ladeluft-Auslasskammer und eine Mehrzahl von Flachrohren (16), wobei die Flachrohre (16) eine Mehrzahl von Turbulatoren (22) aufweisen, aufweisend eine erste Plattierung (32, 42, 44, 52, 54, 56, 56a, 58, 58a, 62, 62a, 64, 64a), einen Kern (30, 40, 50, 55, 55a, 60, 60a) und eine zweite Plattierung (32, 42, 44, 52, 54, 56, 56a, 58, 58a, 62, 62a, 64, 64a), und wobei die erste Plattierung (32, 42, 44, 52, 54, 56, 56a, 58, 58a, 62, 62a, 64, 64a) und der Kern (30, 40, 50, 55, 55a, 60, 60a) während des Lötens sich verbinden, um einen Opferschicht gegen Korrosion zu bilden.

2. Luft-Luft-Wärmetauscher nach Anspruch 1, wobei die erste Plattierung (32, 42, 44, 52, 54, 56, 56a, 58, 58a, 62, 62a, 64, 64a) und/oder die zweite Plattierung (32, 42, 44, 52, 54, 56, 56a, 58, 58a, 62, 62a, 64, 64a) nicht mehr als fünfzehn Prozent (15%) der Kerndicke aufweist.

3. Luft-Luft-Wärmetauscher nach Anspruch 1 oder 2, wobei die erste Plattierung (32, 42, 44, 52, 54, 56, 56a, 58, 58a, 62, 62a, 64, 64a) nicht mehr als fünf Prozent (5%) der Kerndicke aufweist.

4. Luft-Luft-Wärmetauscher nach einem der Ansprüche 1 bis 3, wobei die erste Plattierung (32, 42, 44, 52, 54, 56, 56a, 58, 58a, 62, 62a, 64, 64a) und die zweite Plattierung (32, 42, 44, 52, 54, 56, 56a, 58, 58a, 62, 62a, 64, 64a) aus einer Aluminiumlegierung der 4000-er Reihe besteht.

5. Luft-Luft-Wärmetauscher nach Anspruch 4, wobei die erste Plattierung (32, 42, 44, 52, 54, 56, 56a, 58, 58a, 62, 62a, 64, 64a) aus einem Aluminium der Gruppe bestehend aus 4004, 4045, 4047, 4104 oder 4545 Aluminiumlegierungen besteht.

6. Luft-Luft-Wärmetauscher nach einem der Ansprüche 1 bis 5, wobei die Plattierung (32, 42, 44, 52, 54, 56, 56a, 58, 58a, 62, 62a, 64, 64a) aus einer 4045 Aluminiumlegierung besteht, und der Kern (30, 40, 50, 55, 55a, 60, 60a) aus einer 3003 Aluminiumlegierung besteht.

7. Luft-Luft-Wärmetauscher nach einem der Ansprüche 1 bis 6, wobei die Turbulatoren (22) im Wesentlichen U-förmig, sinusförmig, aufgeschnitten-versetzt, trapez- oder rechteckförmig sind.

8. Luft-Luft-Wärmetauscher nach einem der Ansprüche 1 bis 7, wobei die Turbulatoren (22) eine Dicke von 0,1 bis 1,0 mm aufweisen.

9. Luft-Luft-Wärmetauscher zur Verwendung in einem Kraftfahrzeug, aufweisend eine Einlasskammer (14), eine Auslasskammer und eine Mehrzahl von einen Fluidströmungsweg definierenden Flachrohren (16), wobei die Flachrohre (16) eine Mehrzahl von Turbulatoren (22) aufweisen, aufweisend mindestens eine Plattierung (32, 42, 44, 52, 54, 56, 56a, 58, 58a, 62, 62a, 64, 64a) und einen Kern (30, 40, 50, 55, 55a, 60, 60a), und wobei die Plattierung (32, 42, 44, 52, 54, 56, 56a, 58, 58a, 62, 62a, 64, 64a) und der Kern (30, 40, 50, 55, 55a, 60, 60a) während des Lötens sich verbinden, um einen Opferschicht gegen Korrosion zu bilden.

10. Luft-Luft-Wärmetauscher nach Anspruch 9, wobei die Plattierung (32, 42, 44, 52, 54, 56, 56a, 58, 58a, 62, 62a, 64, 64a) nicht mehr als fünfzehn Prozent (15%) der Kerndicke aufweist.

11. Luft-Luft-Wärmetauscher nach Anspruch 9 oder 10, wobei die Plattierung (32, 42, 44, 52, 54, 56, 56a, 58, 58a, 62, 62a, 64, 64a) an dem Kern (30, 40, 50, 55, 55a, 60, 60a) in einer Richtung längs oder quer zum Fluidströmungsweg angebracht ist.

12. Verfahren zur Herstellung eines Bauteils zur Verwendung in einem Kraftfahrzeug, aufweisend die Schritte:
Rollen einer Plattierung (32, 42, 44, 52, 54, 56, 56a, 58, 58a, 62, 62a, 64, 64a) aus einer ersten Aluminiumlegierungszusammensetzung auf einen Kern (30, 40, 50, 55, 55a, 60, 60a) aus einer zweiten Aluminiumlegierungszusammensetzung, insbesondere auf beide Seiten des Kerns (30, 40, 50, 55, 55a, 60, 60a), um eine Metallanordnung zur Verwendung eines Turbulators (22) in einem Wärmetauscher zu bilden;
Einbauen einer Mehrzahl von Turbulatorelemente (22), die aus der Metallanordnung gebildet sind, in einer Mehrzahl von Flachrohren (16);
Verlöten der zusammengesetzten Turbulatoren (22) mit den Flachrohren (16), um eine Opferschicht auszubilden.

13. Verfahren nach Anspruch 12, wobei die Plattierung (32, 42, 44, 52, 54, 56, 56a, 58, 58a, 62, 62a, 64, 64a) nicht mehr als fünfzehn Prozent (15%), insbesondere nicht mehr als fünf Prozent (5%), der Kerndicke aufweist.

14. Verfahren nach Anspruch 12 oder 13, wobei die erste Aluminiumlegierung eine Aluminiumlegierung der 4000-er Reihe ist.

15. Verfahren nach Anspruch 14, wobei die erste Aluminiumlegierung eine Legierung der Gruppe bestehend aus 4004, 4045, 4047, 4104 oder 4545 Aluminiumlegierungen ist.

16. Verfahren nach einem der Ansprüche 12 bis 15, wobei die Plattierung (32, 42, 44, 52, 54, 56, 56a, 58, 58a, 62, 62a, 64, 64a) aus einer 4045 Aluminiumlegierung besteht, und der Kern (30, 40, 50, 55, 55a, 60, 60a) aus einer 3003 Aluminiumlegierung besteht.

17. Verfahren nach einem der Ansprüche 12 bis 16, ferner aufweisend den Schritt eines Rollens einer zweiten Plattierung (32, 42, 44, 52, 54, 56, 56a, 58, 58a, 62, 62a, 64, 64a) aus einer ersten Aluminiumlegierungszusammensetzung auf den Kern (30, 40, 50, 55, 55a, 60, 60a) aus der Metallzusammensetzung vor dem Schritt des Verlötens.
